# EUROPEAN PATENT APPLICATION

(11) **EP 3 401 784 A1**
(43) Date of publication of application: **14.11.2018**
(21) Application number: 17170721.9
(22) Date of filing: 11.05.2017
(51) Int. Cl.: G06F 9/50, G06F 9/54

(54) **MULTICORE PROCESSING SYSTEM**

(71) Applicant: Tredzone SAS, 75002 Paris (FR)
(72) Inventor: MILED, Slim, 75002 Paris (FR); HABRA, Alain, 75009 Paris (FR); BECHARA, Charly, 75009 Paris (FR)
(74) Representative: Nicolle, Olivier

(57) **Abstract**

Examples of a multicore processing system are described. In one example, for processor having a plurality of processor cores, a first set of cores is selected from amongst plurality of processor cores to categorize the first set of cores as a first zone. Thereafter, the first zone is isolated from execution of non-latency sensitive software. Once the first zone has been isolated, the remaining cores are categorized as a second zone. The execution of latency sensitive software is associated to the first zone and execution of non-latency sensitive software is associated to the second zone. Thereafter, latency sensitive software to the first zone and non-latency sensitive software to the first zone, is provided or installed.

## Description

### BACKGROUND

The number of cores in a processor has increased drastically over the past few years. An increase in the number of cores enhances the functionality of computing devices on which they are implemented. However, the increase in the number of cores has also increased the complexity of applications which may be executed in an environment supported by multicore processors. One such technique which utilizes the benefits of such a multicore processor environment is parallel computing. Parallel computing may be relied on by dataflow software which in turn may include multiple portions each of which may implement multiple functions or operations. Such functionalities are processed in parallel by the multicore processor.

### BRIEF DESCRIPTION OF THE DRAWINGS

The following detailed description references the drawings, wherein:
FIG. 1 is a diagram of an example computing device having a multicore processor implementing the present subject matter;
FIG. 2 is an architectural diagram of an example software stack architecture for programs installed on computing device having a multicore processor implementing the present subject matter;
FIG. 3 depicts an example method implemented in computing device having a multicore processor; and
FIG. 4 depicts another example method implemented in computing device having a multicore processor.

### DETAILED DESCRIPTION

The number of cores in a multicore processor has doubled periodically following the well understood Moore's law. The increase in the number of cores in a multicore processor has been accompanied with a proportional increase in the complexity of the programs and applications which may be run on platform supported by such a multicore processor. However, the increase in the complexity of program may inadvertently result in an increase of the need for computational resources which in turn may increase power consumption and a decrease in computational yield when using such a multicore based computing device making such systems overall inefficient. Therefore, the focus has been in the recent past to increase the yield of complex programs which may function or operate on platforms or devices being supported by multicore processors.

Furthermore, managing the complexity of programs by adding software stack layers may increase the latency of such systems. For example, presently available systems employing multicore processors may include a software stack layer. In such cases, any latency in the computing system may arise individually in either the multicore processor, the operating system and other applications. Such latency, may end up cumulatively greater than what is tolerated. In some circumstances, certain jitters affecting latency may be present across different layers thereby rendering processing latency as less-deterministic and less-predictable. Also, owing to concurrency and resources contention, the performance of application executing within the multicore processor environment does not scale up with the number of cores. Furthermore, multicore processors may also require multithreaded programming which in general contributes to the programming complexity.

To this end, a multicore processor environment is described which addresses the above-mentioned conditions. In one example, the multicore processor environment may be implemented in a computing system. The computing system is so configured such that it addresses the latency which may be occurring at the different layer of the software stack. In the present example, the computing system further includes a multicore processing engine. The multicore processing engine may be coupled to the multicore processor. Each of the cores within the multicore processor may be further in communication with each other through various mechanisms which are generally understood. An example of such a mechanism includes, but is not limited to, non-uniform memory access (NUMA). It should be noted that the aforesaid mechanism is only illustrative and any other mechanism may also be employed without deviating from the scope of the present subject matter.

During operation, the multicore processing engine initially categorizes one or more processor cores in to categories or zones. In the present example, the multicore processing engine may initially categorize the cores into at least two zones, such as a first zone and a second zone. The first zone may be so configured such that the cores included within the first zone only process latency sensitive or high-frequency programs. Examples of such latency sensitive programs include, but are not limited to trading programs. On the other hand, the second zone may be so configured such that the cores included within the second zone only process non-latency sensitive or low-frequency programs. Examples of such non-latency sensitive programs include, but are not limited to, programs for logging or monitoring. It should be noted that other examples of each of these types of programs may also be considered without deviating from the scope of the present subject matter.

Once such different zones are created, the latency sensitive and the non-latency sensitive programs are placed on the respective zones. For example, the latency sensitive programs may be loaded or placed within the first zone which is intended for such application, whereas the non-latency sensitive programs are placed on the second zone. Once the different programs are placed or installed within their respective zones, the multicore processing engine may be initiated. In one example, the programs are placed in the respective zones in an offline mode. The offline mode may be considered as any stage which precedes the initiation of the multicore processing engine.

Subsequently, when the multicore processing engine is initiated and the different programs may be executed by the cores onto which they were installed. As would be understood, owing to the differentiation of the cores into a first zone and a second zone, the jitter experienced by programs which otherwise require low latency, is substantially reduced. Jitter may be understood as latency which is varying over time. This is because the latency sensitive programs are installed in the first zone, which in turn only supports such applications. Since the non-latency sensitive programs are not installed on the first zone, the execution of such non-latency sensitive programs does not affect the execution of the latency sensitive programs. In one example, the cores of the multicore processor allocated for the first zone are isolated from the other zones. In yet another example, the cores within the second zone may be optionally isolated from each other.

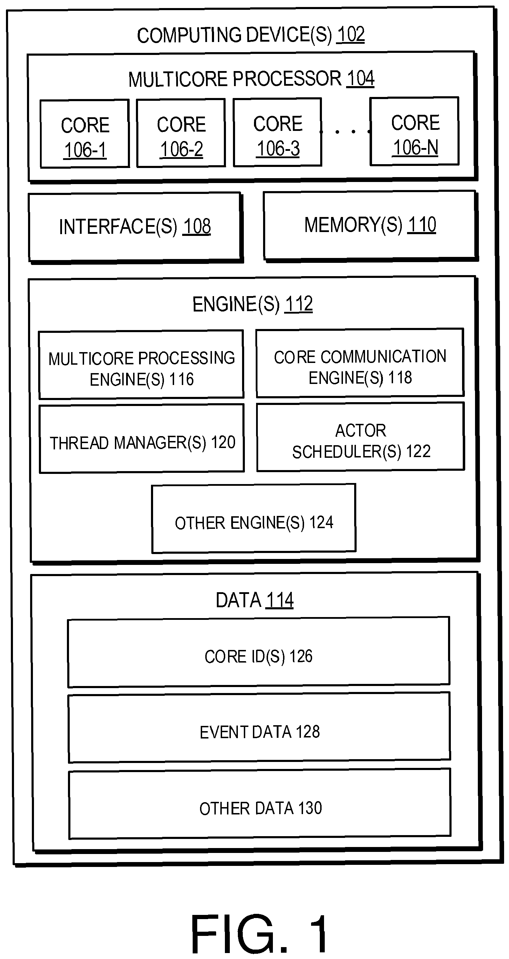

In one example, the present subject matter may be implemented using an actor-model system. An actor may be considered as a computational construct which may be generally available for performing tasks related to computational processes. In the present context, the present subject matter involves running a single thread per core. These and other aspects are further described in conjunction with the **FIGS. 1-4**. The present description is further provided in reference to latency sensitive programs and non-latency sensitive programs. It should be understood, that such programs may be generated using a programming language and may include code which is executable by a processing resource, such as multicore processor. The program may either include a single program for implementing a single functionality or may also include multiple programs for implementing multiple functionalities, which are also collectively referred to as programs.

**FIG. 1** illustrates a computing device(s) 102 which implements the multicore processing engine. The computing device(s) 102 may be implemented as a standalone computing system communicatively connected through a network to other devices. The computing device(s) 102 may be considered as any processor enabled device which performs one or more functions. An example of such a computing device(s) 102 include, but are not limited to, server computers, desktop computers, laptops and portable computers. The present approaches may also be implemented in other types of computing device(s) 102 without deviating from the scope of the present subject matter. The computing device(s) 102 may be either a standalone device or in communication with other computing devices (not shown in **FIG. 1**) over a communication network.

Before providing the mechanism by which the computing device(s) 102 implementing a multicore processing engine operates, an overview is provided of various components of the computing device(s) 102. It should be noted that the computing device(s) 102 may further include other components as well for affecting the claimed subject matter or for implementing other functionalities without limiting the scope of the subject matter as described. The computing device(s) 102 may further include a multicore processor 104 having a plurality of cores 106-1, 2, 3,..., n (collectively referred to as cores 106). The number of cores 106 may vary across architecture or may be based on the type of multicore processor 104. In the present example, each of the cores 106 may be in communication with each other through a communication medium. Furthermore, each of the cores 106 may be homogenous, i.e., each of the cores 106 are of the same type or may be heterogeneous, i.e., may be of differing architectures. In yet another example, each of the cores 106 may be implemented on a single chip, multiple sockets, multiple machines, and co-processors without deviating from the scope of the present subject matter. In another example, the cores 106 may be distributed across multiple computing device(s) 102 in communication with each other over a communication network (not shown in **FIG. 1**).

The communication medium, which enables communication between each of the cores 106, may have certain attributes which facilitate such communication. For example, the communication medium may be substantially a non-deterministic communication medium with no guarantee of latency. The latency is not guaranteed because the communication medium may be shared between the cores 106 with non-predictable access. The communication medium may be considered as any logical or electronic circuitry to facilitate communication between each of the cores 106. The communication medium may be either a single entity or may be a combination of a multiple such communication mediums. Examples of such communication medium include, but are not limited to, shared L3 cache memory, private to private cache memory, bus or Network-On-Chip, PCI based bus, Ethernet or any other network communication layer and physical transmission medium (in case of cores 106 are distributed over multiple computing device(s) 102). It should be noted that "substantially non-deterministic" is attributed to part of the system as well as the overall computing device 102, without any distinction.

Returning to the computing device(s) 102, the computing device(s) 102 includes interface(s) 108 and memory 110. The interface(s) 108 may include a variety of interfaces, for example, interfaces for data input and output devices, referred to as I/O devices, storage devices, network devices, and the like. The interface(s) 108 facilitate communication between the computing device(s) 102 and various computing devices (not shown in FIG. 1) connected in a networked environment.

The memory 110 may store one or more computer-readable instructions and/or data, which may be fetched and executed to set a system state as one of wakeable through a trigger and non-wakeable. The memory 110 may include any non-transitory computer-readable medium including, for example, volatile memory such as RAM, or non-volatile memory such as EPROM, flash memory, and the like. The computing device(s) 102 further includes engine(s) 112 and data 114.

The engine(s) 112 may be implemented as a combination of hardware and programming (for example, programmable instructions) to implement one or more functionalities of the engine(s) 112. In examples described herein, such combinations of hardware and programming may be implemented in several different ways. For example, the programming for the engine(s) 112 may be processor executable instructions stored on a non-transitory machine-readable storage medium and the hardware for the engine(s) 112 may include a processing resource (for example, one or more processors), to execute such instructions. In the present examples, the machine-readable storage medium may store instructions that, when executed by the processing resource, implement engine(s) 112. In such examples, the computing device(s) 102 may include the machine-readable storage medium storing the instructions and the processing resource to execute the instructions, or the machine-readable storage medium may be separate but accessible to computing device(s) 102 and the processing resource. In other examples, engine(s) 112 may be implemented by electronic circuitry.

The data 114 includes data that is either stored or generated as a result of functionalities implemented by any of the engine(s) 112. In an example, the engine(s) 112 include the multicore processing engine(s) 116, core communication engine(s) 118, thread manager(s) 120, an actor scheduler(s) 122, and other engine(s) 124. The other engine(s) 124 may implement functionalities that supplement applications or functions performed by the computing device(s) 102 or engine(s) 112. Further, the data 114 may include core ID(s) 126, event data 128 and other data 130.

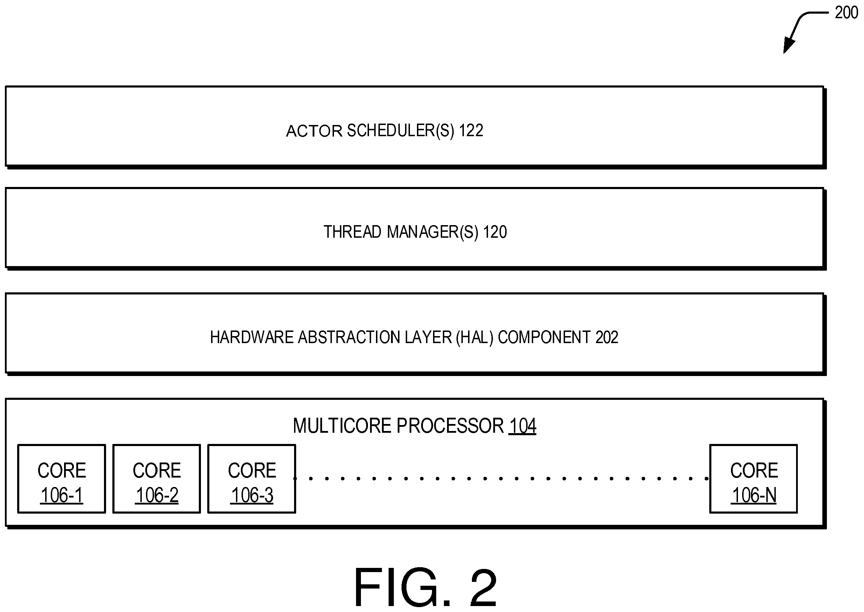

As discussed previously, multicore processing environment and associated systems (such as the computing device(s) 102) may include a multiple software stack with each stack possibly contributing a latency. The resulting cumulative latency may be, such that it may not get offset by increasing the hardware capabilities of computing device(s) 102. To this end, the multicore processing engine(s) 116 affects various functionalities for reducing the overall latency experienced by such systems. The operation of the multicore processing engine(s) 116 is further described in conjunction with **FIG. 2. FIG. 2** describes an architectural diagram of various components, such as engine(s) 112. The present description explains the functioning of the various engine(s) 112 in conformance with the architectural diagram depicted in **FIG. 2**.

**FIG. 2** depicts an architectural diagram 200 depicting an example software stack architecture for programs installed on the computing device(s) 102 having the multicore processing engine(s) 116. As depicted, a hardware abstraction layer (HAL) component 202 is implemented over the cores 106 of the multicore processor(s) 104. Over the HAL component 202, a thread manager(s) 120 is implemented, over which the actor scheduler(s) 122 is further implemented.

Returning to the computing device(s) 102, the HAL component 202 may include any software or combination of software for managing hardware components and software resources of the computing device(s) 102. The HAL component 202 may further provide one or more services for computer programs to execute. An example of HAL component 202 includes an operating system. In the present example, the HAL component 202 manages and controls the cores 106. Generally, requests by one or more different programs are also handled by the HAL component 202. Such programs may be broadly classified into two categories - latency sensitive programs and non-latency sensitive programs. Typically, it has been observed that the interrupts generated by non-latency sensitive programs tend to increase the overall latency experienced by the other latency sensitive programs.

To this end, the multicore processing engine(s) 116 initially categorizes one or more cores 106 into categories. In the present example, the multicore processing engine(s) 116 may initially categorize the cores into at least two zones, such as a first zone and a second zone. For example, cores 106-1, 2 and 3 may be categorized into the first zone, and the remaining cores 106 may be categorized into the second zone. The first zone may be so configured such that the cores 106-1, 2 and 3 only process and execute latency sensitive or high-frequency programs. On the other hand, the second zone may be so configured such that the remainder of the cores 106 included within the second zone only process non-latency sensitive or low-frequency programs. Examples of such non-latency sensitive programs include, but are not limited to, programs for logging or monitoring.

Once such different zones are created, the latency sensitive and the non-latency sensitive programs are placed on the respective zones, i.e., the first zone and the second zone. For example, the latency sensitive programs may be loaded or placed within the first zone which is intended for such application, whereas the non-latency sensitive programs are placed on the second zone. In one example, the programs are placed in the respective zones in an offline mode. Once the different programs are placed or installed within their respective zones, the multicore processing engine(s) 116 may be initiated.

Subsequently, when the multicore processing engine(s) 116 is initiated and the different programs may be executed onto the cores 106 in the respective first zone and the second zone, onto which they were installed. As would be understood, owing to the differentiation of the cores into a first zone and a second zone, the jitter experienced by programs which otherwise require low latency, is substantially reduced. This is because the latency sensitive programs are installed in the first zone, which in turn only supports such applications. Since the non-latency sensitive programs are not installed on the first zone, the execution of such non-latency sensitive programs does not affect the execution of the latency sensitive programs. For example, latency sensitive programs installed on the first zone are not interrupted by the non-latency sensitive programs. The non-latency sensitive programs on the other hand are executed in the second zone. The number of cores 106 which are categorized in the first zone and the second zone may be prescribed by a user. Considering that the latency sensitive programs are unaffected by the non-latency sensitive programs executing within the second zone, the overall latency is substantially reduced.

In one example, each of the cores 106 categorized in the first zone and the second zone may be identified based on an identifier. In the present example, each of the cores 106 is associated with a core ID. Each of the core IDs of the respective cores 106 is stored as core ID(s) 126. It would be understood, that the election of one or more cores 106 may be either contiguous or non-contiguous. For example, if the number of cores 106 is 12, then each of the cores 106 may have core ID(s) 126 as {0,1,2,3,4,5,6,7,8,9,10,11}. In the present example, the multicore processing engine(s) 116 may utilize cores 106 with core ID(s) 126 as {1,5,9,11}. As can be seen, the cores 106 elected for the zone under consideration is not contiguous. In case cores 106 are to be used in a contiguous manner, each of the core ID(s) 126, i.e., {1,5,9,11}, may be logically associated with a serial set of IDs, i.e., referred to as node ID(s). In the present instance, the core ID(s) 126 {1,5,9,11} may be logically mapped to {0,1,2,3} which results in the cores 106 being contiguous in terms of their node ID(s). Accordingly, the node ID(s) may be used by the multicore processing engine(s) 116 for further processing the programs.

At the HAL component 202, the execution of the processes (i.e., programs or software) may be further managed through threads. In one example, the threads may be of at least two types, namely, a user level thread and a kernel level thread. As would be understood, the user level threads are generally threads that are created and managed by a user application. In a similar manner, the kernel level threads are threads which are created and managed at the kernel level. For example, a kernel may be considered as an executable component of the HAL component 202 and provides an interface between one or more programs such as user applications, and the components (such as the cores 106) of the computing device(s) 102.

In one example, the thread manager(s) 120 initially creates, and associates or pins a single thread to a single core selected from one of the cores 106. For example, the thread manager(s) 120 may pin a user level thread with one core, say core 106-1. In a similar manner, kernel level threads may be pinned to specific cores from amongst the cores 106. In one example, the kernel level threads may be pinned to the cores 106 which are part of the first zone. It has been observed that pinning one software execution contexts like a single thread per core provides the most optimal levels of latency for each of the cores 106. As would be understood, latency is reduced as the threads may not be scheduled to another core for performing load balancing. Thus, any latency which may occur as a result of context switching is avoided. Furthermore, any scheduling which is to be undertaken by an operating system such as the HAL component 202 is also eliminated, which in turn also reduces the overall latency as well. In another example, a thread pertaining to the latency sensitive programs which is pinned to a core 106 of the first zone is the only user level thread executed by that core. In such cases the core cannot be shared with another user level thread. On the other hand, threads corresponding to non-latency sensitive programs are pinned to cores 106 in the second zone. In such cases, the cores may be shared with multiple user level threads of other programs.

Once the thread manager(s) 120 has associated single thread with the desired cores 106, the actor scheduler(s) 122 maybe initiated. In one example, the actor scheduler(s) 122 implements an actor model system and links the actor model system with the lower layers, i.e., layers implemented by the thread manager(s) 120 and the HAL component 202. An actor may be considered as a computational construct which may be generally available for performing tasks related to computational processes. The actor may be a monothreaded and sequential code. In the present example, the actor scheduler(s) 122 may associate multiple actors with threads. As would be understood, a thread may be considered as defining a software execution context. A software execution context, in one example, may be considered as a computing environment in which the one or more programs execute with support of the HAL component 202 (e.g., an operating system) and other supportive programs (like runtime libraries) to utilize the components of the computing device(s) 102. In this scenario, the actor scheduler(s) 122 manages and controls a sequential execution of the actors on the core. As would also be understood, the execution of the actor occurs when one or more conditions, referred to as events, are satisfied. In one example, event related information may be stored as event data 128. Since the actors are also associated with one or more cores 106, the actors associated with the same core (say core 106-1) may have access the same computational resources corresponding to the core 106-1. As would be understood, since the actors are effectively restricted to the cores to which they are pinned and since the execution of the actors is done sequentially, any jitter arising due to concurrency access to private memory (e.g., level 1 cache), cache thrashing and memory access noise, is effectively eliminated. The number of actors which may be associated with each thread, and hence with each core, may depend on memory footprint of the actor. In one example, the number of actors may be based on the private memory available for the core under consideration.

For associating one or more actors with user level threads, a start-sequence containing a list of actors may be initially created. In one example, each actor is defined by its corresponding initial parameters. In another example, the actors may also be defined using a node ID of its managing event-loop. The event-loop indexes' list is then inferred from the list of actors. At start, multicore processing engine(s) 116 may create a thread per event-loop. For each event-loop, the multicore processing engine(s) 116 may further instantiate the corresponding actors. The instantiation may in turn be affected using language software class creation mechanisms, as would be generally understood in the art. Upon instantiation, the actors may proceed and perform the corresponding actions which in turn starts the application asynchronous workflows causing event-loop to trigger call-backs, and so on.

Once the actors are associated with the respective threads, the actor scheduler(s) 122 may further be initiated to manage and control the execution of the actors. In one example, the execution of the actors is managed and controlled through a cycle referred to as an 'event-loop'. The event-loop may further include a start-up creation phase, a runtime phase and a destruction phase. It should be noted that the number of stages as described is only illustrative. The number of stages may be added or deleted without affecting the scope of the present subject matter.

During the start-up creation phase, a software thread is created. Once created, the thread manager(s) 120 associates or pins the thread to one of the cores 106, say core 106-1. The thread manager(s) 120 may further assign a priority value to the software thread depending on whether the thread is associated with either the first zone corresponding to latency sensitive software, or the second zone corresponding to the non-latency sensitive software. Thereafter, a core actor is created by the actor scheduler(s) 122. During execution, the created software thread is managed by actor scheduler(s) 122, which is active as long as it contains actors other than the core actor. In one example, the core actor implements the interaction between the HAL component 202 (such as an operating system) and the first zone and the second zone. The above-mentioned steps may be further repeated for creation of other actors.

The steps further proceed to a runtime phase. During the runtime, the actors may be in communication with each other. In one example, for an N-th execution cycle, messages or indications of events is received from one or more actors on the same core 106-1 from a previous execution cycle (N-1). The messages may also be received from other actors executing on different cores as part of their respective event-loop from the previous execution cycle (i.e., N-1). As would be observed, at each execution cycle, the event loop receives events from actors on the same core and actors on different cores. The events that are received correspond to events happened before execution cycle N and after execution cycle N-1. In the examples of the present subject matter as presented the execution cycle for each of the cores 106 is not synchronized from each other. In such a case, it should be noted that the Nth or (N-1)th execution cycles refers to the execution cycles of the same core, such as core 106-1. In case the input events conditions are satisfied, the event loop schedules the Actors to be processed in the same execution cycle.

Once received, the event queues are consumed for execution of N-th execution cycle. Based on the event queues that are consumed, one or more actor callback may be generated and executed by the actor scheduler(s) 122. In one example, the order in which the callbacks are processed are based on a priority value. In one example, the callbacks may be processed based on First-In-First-Out (FIFO). The processing of the actors further proceeds depending on the different actors. For example, asynchronous events produced at the N-th execution cycle may be communicated to the corresponding event loops for other cores. The other cores, say cores 106-2 or 3, may be identified based on the programming of the actor producing the event. Once the actors are processed, they may be destroyed. In one example, if all actors assigned on an event-loop have been destroyed, the actor scheduler(s) 122 also destroys the core actor is also destroyed and the event-loop is terminated.

As discussed above, one or more event queues may be provided in a communication bufferset. The core communication engine(s) 118 implements a communication bufferset which, in one example, affects communication between any two cores 106. In the present example, one bufferset is provided per direction of communication. In such a case, any two cores, such as cores 106-1 and 2, would have two communication bufferset between them. As described previously, each of the cores 106 may further include a private or an exclusive memory which in some circumstances may communicate with another core through a communication medium. As would be noted, since a communication medium, which is shared by some or all the cores, a latency may be introduced owing to a resource contention during memory access despite only a single thread being pinned to a core. In one example, the processing frequency of each of the cores 106 is decoupled with the data communication frequency between such cores 106. In the present example, the multicore processor(s) 108 may create a communication bufferset composed of a pool of buffers of fixed size that may be used by the cores 106 to communicate. In one example, a buffer from the pool of buffers may have a fixed static size (e.g., 4096 bytes), such that it may be accommodated within the private memory of a core, say core 106-1. In one example, the communication bufferset is unidirectional. In another example, the communication bufferset may be generated in case any of the cores 106 are to communicate with each other. In yet another example, the communication bufferset may include a write buffer and a read buffer. In case more data is to be communicated, another buffer from the pool of buffers may be used. When the buffer is no longer needed, it is released to the pool of buffers. In this way, any dynamic creation overhead of memory which may lead to non-predictable latency is avoided.

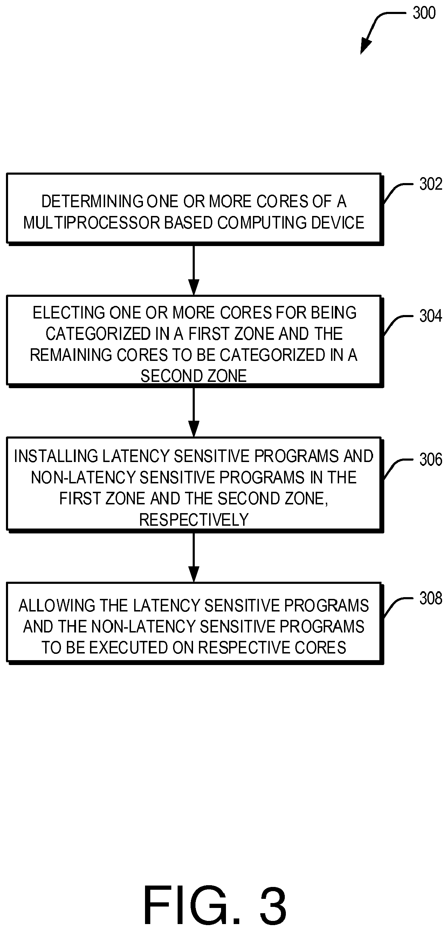

**FIGS. 3-4** illustrate example methods 300-400, respectively, in a multicore processor based computing device. The order in which the methods are described is not intended to be construed as a limitation, and any number of the described method blocks may be combined in any order to implement the methods, or an alternative method. Furthermore, methods 300-400 may be implemented by processing resource or computing device(s) through any suitable hardware, non-transitory machine readable instructions, or combination thereof.

It may also be understood that methods 300-400 may be performed by programmed computing devices, such as computing device(s) 102 as depicted in **FIG. 1**. Furthermore, the methods 300-400 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. The methods 300-400 are described below with reference to computing device(s) 102 as described above; other suitable systems for the execution of these methods may also be utilized. Additionally, implementation of these methods is not limited to such examples.

At block 302, one or more cores of a multiprocessor based computing device are determined. For example, the number of cores available in cores 106 is determined based on an identifier or a core ID associated with each of the respective cores. In the present example, the core IDs of each of the cores 106 is stored in core ID(s) 126. In such instances, if the number of cores 106 is 12, the core ID(s) 126 may be {0,1,2,3,4,5,6,7,8,9,10,11}.

At block 304, one or more cores are elected for being categorized in a first zone and the remaining cores are categorized in a second zone. In the present example, the multicore processing engine(s) 116 may utilize cores 106-1, 2, 3 and 4 with core ID(s) 126 as {1,5,9,11} and categorize them in the first zone. The remaining cores 106-5, 6, ..., 12 may be categorized into the second zone. The first zone may be so configured such that the cores 106-1, 2, 3 and 4 only process and execute latency sensitive or high-frequency programs. On the other hand, the second zone may be so configured such that the remainder of the cores 106-5, 6, ..., 12 included within the second zone only process non-latency sensitive or low-frequency programs. Examples of such non-latency sensitive programs include, but are not limited to, programs for logging or monitoring. In another example, the core ID(s) 126 of the cores 106-1, 2, 3 and 4 may be associated with a node ID(s) in case a contiguous series of cores 106 is required for categorizing in the first zone and the second zone.

At block 306, latency sensitive programs and non-latency sensitive programs are installed in the first zone and the second zone, respectively. For example, the latency sensitive programs may be loaded or placed within the first zone which is intended for such application, whereas the non-latency sensitive programs are placed on the second zone. In one example, the programs are placed in the respective zones in an offline mode. Once the different programs are placed or installed within their respective zones, the multicore processing engine(s) 116 may be initiated.

At block 308, allowing the latency sensitive programs and the non-latency sensitive programs to be executed on respective cores. For example, when the multicore processing engine(s) 116 is initiated and the different programs may be executed onto the cores 106 in the respective first zone and the second zone, onto which they were installed. As would be understood, owing to the differentiation of the cores into a first zone and a second zone, the jitter affecting latency experienced by programs which otherwise require low latency, is substantially reduced. In such a case, latency sensitive programs installed on the first zone are not interrupted by the non-latency sensitive programs. The non-latency sensitive programs on the other hand are executed in the second zone. The number of cores 106 which are categorized in the first zone and the second zone may be prescribed by a user.

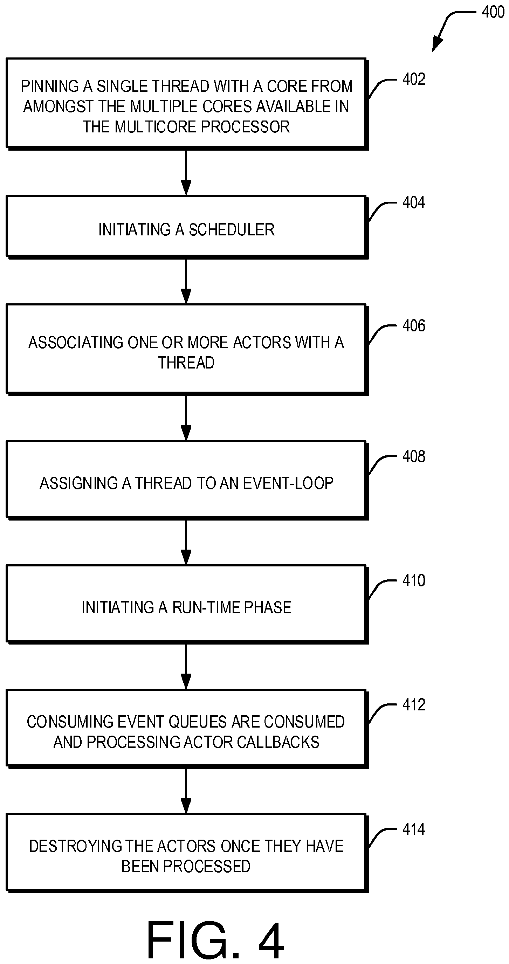

**FIG. 4** further describes an example method depicting processing of threads in an actor model based system. At block 402, a single thread is pinned or associated with a core from amongst the multiple cores available in the multicore processor. For example, the thread manager(s) 120 associates or pins a single thread to a single core selected from one of the cores 106. With the threads pinned with the cores 106 in any of the first zone and the second zone, latency is reduced as the threads may not be scheduled to another core for performing load balancing. Furthermore, any scheduling which is to be undertaken by an operating system such as the HAL component 202 is also eliminated, which in turn also reduces the overall latency as well. In another example, threads pertaining to the latency sensitive programs which are pinned to the cores 106 of the first zone are private and cannot execute more than one thread pertaining to latency sensitive programs. On the other hand, threads corresponding to non-latency sensitive programs may be pinned to cores 106 in the second zone and may have one or more threads pertaining to non-latency sensitive programs to execute on a core.

At block 404, the actor scheduler(s) is initiated. The actor scheduler(s) manages and schedules one or more actors within an actor model system. For example, the actor scheduler(s) 122 implements an actor model system and links the actor model system with the lower layers, i.e., layers implemented by the thread manager(s) 120 and the HAL component 202. An actor may be considered as a computational construct which may be generally available for performing tasks related to computational processes.

At block 406, one or more actors are associated with a thread. For example, the actor scheduler(s) 122 associates one or more actors with a thread. Overall, the actor scheduler(s) 122 manages and controls a sequential execution of the actors on the core. The core on which the actor may be executed may be based on the core, say core 106-1, to which the actor is associated with. As would also be understood, the execution of the actor occurs when one or more conditions, referred to as events, are satisfied. Since the actors are also associated with one or more cores 106, the actor associated with the same core (say core 106-1) may have access the same computational resources corresponding to the core 106-1. As would be understood, since the actors are effectively restricted to the cores to which they are pinned, and since the execution of the actors is done sequentially, any jitter arising due to concurrency access to private memory, cache thrashing and memory access noise, is effectively eliminated.

At block 408, an event-loop is assigned to an already created thread. As explained previously, the execution of the actors is managed and controlled through a cycle referred to as an 'event-loop'. The event-loop may further include a start-up creation phase, a runtime phase and a destruction phase. During the start-up creation phase, a software thread is created. In the present example, once created, the thread manager(s) 120 associates or pin the thread to one of the cores 106, say core 106-1. The thread manager(s) 120 may further assign a priority value to the software thread depending on whether the thread is associated with the either the first zone corresponding to latency sensitive software, or the second zone corresponding to the non-latency sensitive software.

At block 410, a run-time phase is initiated during which the actors communicate with each other across different event-loop. In one example, for an N-th execution cycle, messages or indications of events is received from one or more actors on the same core 106-1 from a previous execution cycle (N-1). The messages may also be received from other actors executing on different cores as part of their respective event-loop from the previous execution cycle (i.e., N-1). As would be observed, at each execution cycle, the event loop receives events from actors on the same core and actors on different cores. The events that are received correspond to events happened before execution cycle N and after execution cycle N-1. In case the input events conditions are satisfied, the event loop schedules the Actors to be processed in the same execution cycle.

At block 412, event queues are consumed and various callbacks are processed. For example, the event queues are consumed for execution of N-th execution cycle. Based on the event queues that are consumed, the actor scheduler(s) 122 may generate and execute one or more actor callback by the actor scheduler(s) 122. In one example, the order in which the callbacks are processed are based on a priority value or may be processed based on First-In-First-Out (FIFO). The processing of actors further proceeds depending on the different actors. For example, asynchronous events produced at the N-th execution cycle may be communicated to the corresponding event loops for other cores. The other cores, say cores 106-2 or 3, may be identified based on the programming of the actor producing the event. In case of synchronous callbacks, actors on the same core and managed by the same event-loop may communicate with each other in the same execution cycle N through synchronous calls.

At block 414, the actors may be destroyed once they have been processed. In one example, if all actors assigned on an event-loop have been destroyed, the actor scheduler(s) 122 also destroys the core actor and the event-loop is terminated.

Although examples for the present disclosure have been described in language specific to structural features and/or methods, the appended claims are not necessarily limited to the specific features or methods described. Rather, the specific features and methods are disclosed and explained as examples of the present disclosure.

## Claims

1. A system comprising:
a memory;
a processor having multiple processor cores, wherein each of the cores are communicatively coupled to each other;
a multicore processing engine coupled to the processor, wherein the multicore processing engine is to:
select a first set of cores from amongst the multiple processor cores to categorize the first set of cores as a first zone;
isolate the first zone from execution of non-latency sensitive software;
categorize the remaining cores as a second zone; and
associate execution of latency sensitive software to the first zone and execution of non-latency sensitive software to the second zone.

2. The system as claimed in claim 1, wherein the non-latency sensitive software comprises software likely to generate jitter during execution at any one of the processor cores of the first zone.

3. The system as claimed in claim 1, wherein the multicore processing engine is to further associate a single software thread to a single core from amongst the first set of processor cores in the first zone.

4. The system as claimed in claim 1, wherein the multicore processing engine is to further associate one of a single software thread and plurality of software threads to any core from amongst the processor cores of the second zone.

5. The system as claimed in claim 1, further comprising a core communication engine, wherein the core communication engine is to define a communication bufferset between any two processor cores, wherein the communication bufferset specifies a unidirectional communication pathway between the two processor cores in any of the first zone and the second zone.

6. The system as claimed in claim 5, wherein the communication bufferset comprises a read buffer and a write buffer.

7. The system as claimed in claim 6, wherein number of read buffers and write buffers is variable during runtime.

8. The system as claimed in claim 5, wherein the communication bufferset is created from a pool of buffers allocated dynamically at runtime.

9. The system as claimed in claim 1, wherein the multiple processor cores are executing an actor-model system.

10. The system as claimed in claim 9, wherein a plurality of actors in the actor-model system are associated within a single software thread.

11. A method comprising:
for processor having a plurality of processor cores, selecting a first set of cores from amongst plurality of processor cores to categorize the first set of cores as a first zone;
isolating the first zone from execution of non-latency sensitive software;
categorizing the remaining cores as a second zone;
associating execution of latency sensitive software to the first zone and execution of non-latency sensitive software to the second zone; and
providing latency sensitive software to the first zone and non-latency sensitive software to the second zone.

12. The method as claimed in claim 11, further comprising associating user level threads to the second zone.

13. The method as claimed in claim 11, wherein each of the processor cores are identified through a unique core ID.

14. A non-transitory computer readable medium comprising instructions that when executed by a processor resource is to:
select a first set of cores from amongst plurality of processor cores to categorize the first set of cores as a first zone;
isolate the first zone from execution of non-latency sensitive software;
categorize the remaining cores as a second zone; and
associate execution of latency sensitive software to the first zone and execution of non-latency sensitive software to the second zone.

15. The computer-readable medium as claimed in claim 14, wherein a single software thread is associated to a single core from amongst the first set of processor cores in the first zone.
